# EUROPEAN PATENT APPLICATION

(11) **EP 4 787 919 A1**
(43) Date of publication of application: **05.08.2026**
(21) Application number: 26154059.5
(22) Date of filing: 26.01.2026
(51) Int. Cl.: H04W 12/069, H04L 9/06, H04L 9/08, H04L 9/40, H04W 12/088

(54) **PROPAGATING POLICY CHANGES IN A NETWORK USING DISTRIBUTED POLICY ENFORCEMENT**

(30) Priority: 29.01.2025 US 202519040151
(71) Applicant: Arista Networks, Inc., Santa Clara, CA 95054 (US)
(72) Inventor: Kumar, Vivek, Santa Clara, CA 95054 (US); Naik, Chickayya G., Santa Clara, CA 95054 (US); Sam, Dennis, Santa Clara, CA 95054 (US)
(74) Representative: Hoffmann Eitle

(57) **Abstract**

Systems and methods for distributing policy enforcement in a network are disclosed. Embodiments may allow the distribution of enforcement of policies from firewalls to other network elements to allow the offloading of the enforcement of actions of those policies for flows to network elements, where the applicability of those policies to those flows was determined by the firewall. Moreover, embodiments may be adapted to update flows offloaded at the network elements to which they have been offloaded with updated policy actions for changed policy actions associated with those flows.

## Description

### BACKGROUND

Firewalls are important components of modern networks. This is the case at least because firewalls may play an integral part in the security infrastructure of such networks, acting as barriers between networks, or devices on those networks, by examining and controlling the flow of traffic in a network based on traffic control policies.

These firewalls can inspect individual packets of data as they traverse the network and apply particular traffic control policies based on the characteristics of the packets and the traffic control policies. Traffic control policies installed at a firewall thus define a set of matching data along with an action. Accordingly, when traffic (e.g., packets) arrives at network elements in the network, the network elements can forward this traffic to a firewall. The firewall inspects traffic received from these network elements to determine if that traffic matches a traffic control policy installed at the firewall. The firewall can then enforce the corresponding action for any matched traffic control policies.

Oftentimes, traffic control policies may be defined in terms of data that can only be obtained through some form of packet inspection. Packet inspection, especially as it pertains to L4 and higher stateful inspection of traffic in a firewall, is, however, computationally expensive. Moreover, it is typical that the determination of an action associated with certain traffic control policies may be rarely, if ever, re-evaluated for specific traffic.

It would thus be desirable to reduce the computational burden placed on firewalls in a network in association with the application of traffic control policies while also reducing the commensurate increase in traffic necessitated by the need to transfer such traffic from other network elements to the firewall in order to enforce those traffic control policies. In particular, it would be desirable to allow other network elements to enforce traffic control policies in a network to reduce the burden placed on such firewalls. There are, however, a number of issues pertaining to enforcement of these policies at these network elements. One prominent issue is the maintenance of synchronicity across the network with respect to enforcement of these policies.

### BRIEF DESCRIPTION OF THE DRAWINGS

The drawings accompanying and forming part of this specification are included to depict certain aspects of the disclosure. It should be noted that the features illustrated in the drawings are not necessarily drawn to scale. A more complete understanding of the disclosure and the advantages thereof may be acquired by referring to the following description, taken in conjunction with the accompanying drawings in which like reference numbers indicate like features.
FIGURE 1 is a block diagram illustrating a network topology.
FIGURE 2 is a block diagram illustrating a logical depiction of the use of a firewall in a network.
FIGURE 3 is a block diagram illustrating a network architecture for distributed policy enforcement for flows in accordance with one embodiment.
FIGURE 4 is a block diagram depicting a firewall instance adapted for offloading policy enforcement for flows in a network according to an embodiment.
FIGURE 5 is a block diagram depicting a network element adapted for offloading policy enforcement for flows in a network according to an embodiment.
FIGURES 6A-6C are flow diagrams depicting embodiments of methods for offloading flows from a network element such as a firewall.
FIGURE 7 is a flow diagram depicting one embodiment of a method for installing offloaded flows at a network element.

### DETAILED DESCRIPTION

As discussed, in modern network environments, firewalls are essential components of network security infrastructure, acting as barriers between trusted internal networks and untrusted external networks, such as the Internet. These firewalls enforce traffic control policies (or just policies) installed on the firewall by examining and controlling the flow of traffic based on these policies. As firewalls may inspect the contents of packets at the application layer, in certain cases firewalls can detect and block specific types of traffic based on application-level protocols, such as HTTP, FTP, or SMTP.

Certain implementations of firewalls may comprise a distributed firewall (e.g., a sharded or segmented firewall) such that a firewall may include one or more firewall instances. In a distributed firewall, a set of firewall instances may cooperate to perform firewall functionality within the network. For example, a distributed firewall may be utilized in a network architecture that involves deploying multiple firewall instances to create separate zones within a network. Each firewall instance can, for example, serve as a barrier between different segments of the network, controlling the flow of traffic and enforcing security policies specific to each segment.

To illustrate in more detail, firewalls inspect individual packets of data as they traverse the network. Each packet contains information such as source and destination IP addresses, port numbers, or protocol types. Traffic control policies installed at the firewall define a set of matching data along with an action (e.g., such as permit or deny). The matching data used to define the policy can be based on various criteria associated with traffic, such as source and destination IP addresses (e.g., including ranges or prefixes), port numbers (or ranges), protocols (e.g., a layer 4 (L4) protocol), and even data related to specific applications or services.

Accordingly, when traffic (e.g., packets) arrives at network elements (e.g., devices, either physical or virtual) in the network, such as edge network elements (e.g., top of rack (TOR) switches or the like), the network element forwards this traffic to the firewall. The firewall inspects traffic received from these network elements to determine if that traffic matches a traffic control policy installed at the firewall. Namely, the firewall may compare data obtained from, or associated with, a packet against the matching data of the installed policies to see if a policy is matched. The firewall can then enforce the corresponding action (e.g., permit or deny) for any matched policies.

Packet inspection, especially as it pertains to L4 and higher stateful inspection of traffic in a firewall, is, however, computationally expensive. Further, the firewall itself may be additionally burdened when traffic is forwarded to the firewall, as the firewall normally has to hair pin such traffic. Moreover, it is typical that the determination of an action associated with a flow (e.g., if the flow is allowed or denied) is done only when the flow is first established, and is usually never re-evaluated. In particular, when a traffic control policy is matched, the firewall may establish a flow at the firewall. The establishment of a flow at the firewall may include storing a definition of the flow comprising a tuple (e.g., a set of data) defining that flow, such as a source IP, a destination IP, a source port, a destination port, and a protocol associated with traffic corresponding to that flow. This establishment of the flow may also include storing the flow (i.e., the set of data defining the flow) in association with the action as determined from the matching traffic control policy. Thus, when traffic associated with the same flow is subsequently received, that traffic can be matched against the installed flow and the corresponding action for the installed flow taken by the firewall.

As may be realized, packet inspection at a firewall is computationally expensive and the need for inspection of traffic by a firewall may increase (e.g., east-west) traffic in a network because of the need to transmit such traffic from network elements to the firewall for inspection. Administrators or operators of such networks may thus desire to reduce the computational burden placed on firewalls in a network while also reducing the commensurate increase in traffic necessitated by the need to transfer such traffic from other network elements to the firewall in order to enforce the policies.

In many cases, certain network elements, such as network edge elements (e.g., TOR switches), may include hardware or software resources that are underutilized. However, it has heretofore been impossible to take advantage of these underutilized resources on other network elements in an network to perform certain types of policy enforcement, as such network elements are not capable of performing packet inspection (e.g., stateful or L4 or higher packet inspection), or could not be made capable of performing such inspection without slowing packet processing at these elements to an unacceptable level.

What is desired, therefore, are systems and methods to improve firewall throughput by offloading policy enforcement from a firewall to other network elements while still maintaining the ability to enforce policies requiring packet inspection (e.g., stateful or L4 packet inspection), including the enforcement of policy actions made by a firewall in accordance with such packet inspection.

To those ends, among others, embodiments as disclosed herein may provide systems and methods for distributing traffic control policy enforcement in a network. Specifically, embodiments may allow the distribution of enforcement of traffic control policies from firewalls to other network elements, including network edge elements such as TOR switches or the like. Thus, embodiments may allow the offloading of enforcement of actions for flows to network elements where those actions were determined for those flows by the firewall after (e.g., stateful, or L4 or higher) packet inspection of those flows. This allows the enforcement of policy actions on flows determined from stateful inspection of flows at network elements (including network edge elements) that are not themselves capable of such stateful packet inspection, reducing traffic in the network and reducing the computational burden on the firewall.

To illustrate in more detail, according to embodiments, policies may be installed at a firewall in a network. This firewall may comprise distributed functionality residing at one or more logical or physical firewall instances in the network. The policies can be defined by users (e.g., administrators) of the network using an interface associated with network management such as that offered by a cloud based network management system. The policies are thus defined using a set of matching data along with an action (e.g., such as permit or deny). These defined policies are installed on the firewall in the network. In the case where the firewall comprises multiple distributed firewall instances, each policy may be installed at one of the instances, multiple of the firewall instances, or all of the firewall instances of the firewall.

Using these installed policies, the firewall (e.g., each firewall instance) may make policy enforcement decisions (e.g., permit or deny) with respect to flows in the network. These policy enforcement decisions may result from applying these policies to traffic forwarded to the firewall from network elements in the network (e.g., network edge devices). When these policy enforcement decisions are made the firewall may establish the flow at the firewall, including storing the flow (i.e., the tuple defining the flow) in association with the determined action from a matching traffic control policy for the flow. Thus, when traffic associated with the same flow is subsequently received, that traffic can be matched against the installed flow and the corresponding action for the installed flow taken by the firewall.

Each of the established flows at the firewall may also be associated with a session. The session may be a stateful session (e.g., for TCP flows) that has a start and end time or keepalive timer, or may be stateless session (e.g., for UDP flows) that may have a timer and associated expiration time. In this manner, it can be determined when a session for a flow has ended based upon a timer associated with the session. This timer may have, for example, an age out period whereby if the timer is not reset before expiration of the age out period the flow session may be deemed as ended or inactive and the flow removed from the firewall.

At one or more points or intervals, a firewall flow distribution agent on the firewall may evaluate these flows (e.g., the flows established at the firewall) to determine one or more of these flows to offload to other network elements in the network, such as network edge elements (e.g., TOR switches or the like). The determination of which of the established flows at the firewall should be offloaded may be made using a heuristic (e.g., algorithm) based on an offload metric. This offload metric may be based on almost any criteria desired, including a priority associated with the flow. Other criteria may include determined data, or a prediction, associated with the flow, where the prediction may be statically assigned or algorithmically determined. The offload metric could be, based on an amount of traffic for that flow (or meeting that policy) that is received at the firewall, a quality of service indicator associated with the policy, that a user has designated or specified that a policy should be offloaded, or some other criteria.

For a flow that the firewall flow distribution agent has determined should be offloaded, an offload message including that flow (e.g., the tuple defining that flow, such as a source IP, a destination **IP,** a source port, a destination port, and a protocol) and the enforcement action (e.g., permit or deny) may be sent to a network element for offload. In some embodiments, a (e.g., offload) priority may be associated with flows installed at the firewall and such a priority may be included in an offload message so that priority may be utilized by network elements receiving such an offload message.

In one embodiment, the offload message may only be sent to, or obtained by, network elements involved with that flow, such as the network edge element at which traffic for that flow is received from the device (e.g., host) sending traffic of that flow. To illustrate in more detail, when traffic of a flow is initially redirected to the firewall from a network element (e.g., a network edge element), this redirected traffic may be encapsulated in a Virtual Extensible LAN (VXLAN) tunnel implemented in the network. Thus, the encapsulating packet for redirecting that traffic from that network element to the firewall through a VXLAN tunnel may include, as the source IP address, the IP address of the network element (e.g., network edge element) that redirected the traffic for that flow to the firewall. As such, when a flow is established at the firewall (e.g., based on the inspection for traffic for that flow and any matching policies at the firewall), that established flow may be associated with the IP address of the network element (e.g., network edge element) that receives traffic for that flow as determined from the source IP address of the VXLAN encapsulation packet including the redirected traffic for that flow.

Accordingly, when the firewall flow distribution agent at the firewall determines a flow should be offloaded, the firewall flow distribution agent can determine the **IP** address of the network element associated with the flow to which an offload message for that flow should be sent. The offload message for that flow can thus be directed specifically to that network element. In one embodiment, for example, these offload messages may be distributed to network elements according to a publish subscribe distribution architecture (e.g., a mounting framework).

Specifically, a flow distribution agent on the network element may subscribe to messages associated with the IP address of that network element. For example, the network element may send a subscription notification to each firewall instance subscribing to messages for the IP address of that network element. When the flow distribution agent on the firewall determines that an offload message is sent for a flow, the firewall flow distribution agent determines the IP address of the network element associated with the flow that it is attempting to offload and publishes the offload message (e.g., the message specifying the tuple for that flow and the policy enforcement action for that flow) for that determined IP address. The network element flow distribution agent subscribed to messages for that IP address will then receive that offload message at the network element associated with that IP address.

A network element flow distribution agent may receive an offload message (e.g., an offload message published to its IP address), and install the flow and enforcement action specified by the offload message at the network element (e.g., store the tuple defining the flow and the associated enforcement action), such that when traffic associated with that flow is received at the network element the enforcement action may be applied by the network element. In this manner, the enforcement action for the flow may be applied at the network element without the network element forwarding that traffic to the firewall.

In one embodiment, the network element flow distribution agent may use a best effort methodology with respect to these offload messages, and may make an (e.g., independent) determination whether flows specified in offload messages should (or should not) be installed at the network element (or which flows should be deinstalled from the network element). Moreover, the network element flow distribution agent may not acknowledge the receipt of an offload message. Accordingly, there may be no requirement that the network element flow distribution agent maintain data on which firewall instance manage such flows (e.g., when multiple firewall instances are implemented in the network) and seamless transition between a single or distributed firewall implementation is allowed without any changes to the flow distribution methodology or architecture.

In particular, in certain cases a network element flow distribution agent may receive a large volume of offload messages, or the firewall in the network may be a distributed firewall including a number of firewall instances and the network element flow distribution agent may receive offload messages from these multiple firewall instances. Accordingly, it may be desirable for embodiments of a network element flow distribution agent to select among the various flows in received offload messages to determine which of those flows to install at the network element. This determination whether to (or not to) install a flow at a network element may be made based on a wide variety of criteria such as hardware resources associated with, or available at, the network element, priorities associated with the flows as received in the offload messages or determined at the network element, or other factors.

When it is determined that a flow specified in an offload message is to be installed at the network element, the network element flow distribution agent may install the flow at the network element including storing the flow (i.e., the tuple defining the flow) in association with the determined action as specified in the offload message received by the network element flow distribution agent. Accordingly, when traffic associated with that flow is subsequently received at that network element, the network element flow distribution agent may determine that the flow is installed at the network element and take the enforcement action specified in association with that flow without redirecting the traffic for that flow to the firewall. In this manner, enforcement actions determined for a flow at a firewall (e.g., even including enforcement actions based on stateful L4 or higher based packet inspection) may be applied at network elements (e.g., network edge elements) without actual involvement of the firewall, including without the need to redirect traffic for such flows to the firewall.

In addition to enforcing the actions for such flows at the network element, in some embodiments the network element flow distribution agent may periodically update the firewall flow distribution agent on the state of these flows using a heartbeat message or the like. According to one embodiment therefore, the network element flow distribution agent may maintain a hit counter associated with each flow installed at the network element. Each time traffic (e.g., a packet) associated with that flow is received at the network element the network element flow distribution agent may increment (or otherwise update) this hit counter associated with the flow. This hit counter may be reset at a heartbeat interval. The period of this heartbeat interval may be fixed or algorithmically determined based on a heuristic where the heuristic used to determine such a heartbeat interval can, for example, be a function based on an age out time for flow sessions on the firewall in the network. At the expiration of this heartbeat interval then, if the hit counter for a flow is non-zero (or otherwise indicates traffic for the flow has been received during the heartbeat interval), a heartbeat message (e.g., a keepalive message) specifying that flow (e.g., including the tuple defining that flow) may be sent to the firewall (e.g., one, multiple, or all firewall instances). This heartbeat message may, for example, be sent using a stateless protocol such as UDP. When the firewall flow distribution agent receives such a heartbeat message it renews the flow session at the firewall associated with the flow specified in the heartbeat message (e.g., it resets, recalculates or renews the timer associated with the session for that flow). As such if no heartbeat message is received for a flow for which a flow session is maintained at the firewall, that flow session will naturally age out and be removed at the firewall.

In one embodiment, such as where a firewall in the network may be implemented in multiple instances, a heartbeat message may not only specify the flow (e.g., include the tuple defining the flow) but may additionally specify identifying information associated with network element on which the flow is installed. This network element identifying information, can for example, be included in a field of a header of a packet including the heartbeat messages and may be, for example, a MAC address of the network element or another type of identifier for the network element.

For example, in one embodiment the heartbeat message may comprise a VXLAN encapsulated packet, where the outer header provides identifying information to identify, for example, the network element on which the flow is installed using the source **IP** field (e.g., and not the MAC). A unique Direction MAC (D-MAC) address (e.g., included in the heartbeat message or outer VXLAN header including the heartbeat message) may allow a receiving firewall instance to identify the received VXLAN packet as a heartbeat message (e.g., leaving the inner-header in the VXLAN packet to be identical to that of a packet in the flow). This allows for any intermediate load balancers to correctly load balance the heartbeat message to the correct firewall instance (e.g., the firewall instance where the associated flow is installed) and for the firewall instance to identify the flow to which that heartbeat message is related.

In this manner, in cases where the firewall includes multiple firewall instances, the heartbeat message may be routed to the appropriate firewall instance (e.g., the firewall instance responsible for processing traffic for that network element or from which that flow was offloaded to that network element). For example, a load balancer balancing traffic between different firewall instances may utilize this network element identifying information to load balance the heartbeat message from the network element to a correct firewall instance without having to store any additional state at the load balancer or perform any additional parsing or packet processing (e.g., greater than what would be required for standard load balancing to those firewall instances).

The maintenance of these sessions at the firewall may be highly useful in a variety of scenarios. As one example, a reload or reboot of a network element (or any other event that may cause a loss or reset of data or memory at the network element) may cause traffic to leak towards the firewall before requests to offload are made. As another example, if a network (e.g., host) device connected to one network element moves to another network element (e.g., a network edge element such as a switch) that network element will not have any flows associated with the newly connected network device installed on that network element. Thus, when that new network element receives traffic for that same flow (e.g., associated with the same tuple of source **IP,** source port, destination IP, destination port, protocol, etc.) the new network element will again route that traffic from that flow to the firewall. The firewall can receive the traffic for that flow from the network element and because the tuple generated from this received traffic is the same, the firewall may match this traffic to an ongoing flow session. The firewall flow distribution agent can then determine that the traffic for an established flow session is coming from a new network device (e.g., the source IP address of the originating network element in the VXLAN packet for the traffic is different from the source IP associated with the flow session at the firewall). Based on this determination the firewall flow distribution agent determines that the flow and enforcement action need to be installed on this new network element and sends a message for that flow and enforcement action to that network element (e.g., using the IP address of that network element).

As embodiments may allow the distribution of policy enforcement actions to network elements, including enforcement actions determined at a firewall based on stateful packet inspection, embodiments may provide a number of advantages. For example, by offloading policy enforcement actions that a firewall has determined for a flow after stateful inspection to an edge network element embodiment may allow the constructive use of hardware resources available and unused by edge network elements to avoid processing traffic at a firewall. As more efficient use of computational resources may be made by applying enforcement actions determined by the firewall at network elements earlier in the flow (e.g., at the network edge) the need to have such traffic inspected by the firewall may be obviated once an action has been determined. Thus, the application of these policy enforcement actions can be done by using unallocated hardware resources on a network element without the subsequent need for L4 or higher inspection.

As such, embodiments may provide a unique solution that integrates a firewall with edge network elements to apply an action resulting from stateful policy inspection on a network element that is unable to perform inspection beyond L3 (e.g., L4 or higher). This capability allows firewalls to see a reduced traffic load which may, in turn, reduce the need for large, complex or expensive firewalls. Moreover, as this integration between the firewall and network elements can be based on a best effort basis network changes may be accommodated without compromising security.

This type of deployment may, however, have issues related to the synchronicity of policy enforcement across the network. To illustrate, traffic management policies may change (e.g., be changed by a user) and these traffic management policy changes provided to a firewall. Such changes may encompass, for example, changes to the action for that policy. Typically, when policy changes occur, a firewall reassesses actions for flows meeting that policy when traffic for that flow is received after the policy update, preventing stale policies in the firewall. According to embodiments disclosed herein, however, enforcement of certain policies for certain flows may be offloaded to network elements. Thus, traffic for these flows may not be received at the firewall.

More importantly, in the cases where the action for these traffic management policies have changed, the enforcement action for that policy may be out of synchronicity with the current policy at the network elements with respect to offloaded flows at the network elements to which flows meeting that policy have been offloaded. **In** other words, at the point the flow meeting that changed policy (e.g., and the policy action) were initially offloaded to the network element (e.g., at a first time), the action associated with the policy was the previous (e.g., old) action. The network element to which the flow meeting that policy was offloaded may thus continue to enforce that stale (old) policy action for traffic of that flow, despite that the action for that policy has been altered.

As may be realized, it is crucial to avoid enforcing the incorrect (e.g., stale) actions with respect to these offloaded flows. While it may appear that a solution may be to remove such offloaded flows meeting a policy when that policy is changed, as multiple network elements may be involved with offloaded flows (or associated bi-directional flows) the simple removal of those offloaded flows from the network elements (and thus redirecting traffic for those flows back to the firewall) due to a policy change can result in out-of-order packet processing and other inefficiencies.

What is desired, therefore, is to update the flows offloaded at the network elements to which they have been offloaded. Specifically, what is desired is to update these offloaded flows at the network elements with the correct (updated) policy actions for changed policies associated with those flows.

Thus, embodiments of the systems and methods disclosed herein may be adapted to update flows associated with changed, altered or updated (all used here interchangeably) policies that were (e.g., previously) installed at network elements. In particular, embodiments may determine that a policy (e.g., a policy action) associated with an offloaded flow has changed and indicate that the flow should be offloaded. Additionally or alternatively, a criterion associated with the flow used to determine the offload metric associated with the flow, such as a priority associated with the offloaded flow, may be adjusted. For example, the priority associated with the flow may be set to the highest priority. Moreover, the action associated with the offloaded flow can be updated to the current action associated with the policy. In this manner, when the firewall flow distribution agent on the firewall evaluates these flows to determine flows to offload to other network elements in the network, the indicator that the policy has changed or the offload metric determined for flows associated with changed policies (e.g., flows associated with these policies that have been updated), will ensure that the flow with the changed policy is selected to offload. Moreover, when the flow is offloaded, the current action associated with that policy will be included such that this current action can be enforced with respect to that offloaded flow.

Accordingly, when the flows at the firewall are next evaluated to select flows to offload that previously offloaded flow associated with the changed policy may be selected for offload based on the indicator on changed criterion (e.g., the highest priority set for that flow). When that flow is selected for offload, an offload message including that flow (e.g., the tuple defining that flow, such as a source IP, a destination **IP,** a source port, a destination port, and a protocol) and the (e.g., updated) enforcement action associated with the (e.g., updated) policy may be sent to the network element associated with the flow. In some embodiments, the (e.g., offload) priority may be included in the offload message so that priority may be utilized by the network elements receiving such an offload message to install that flow at the network element. When the network element receives this subsequent offload message for the flow, the network element may (e.g., re)install that flow at the network element with the current enforcement action associated with the policy (e.g., replacing the associated flow previously installed on the network element with the previous enforcement action for that policy).

It will be understood here for purposes of this disclosure that (re)installing a flow at a network device may be replacing an installation of that flow directly with subsequent installation or may entail deleting or flushing the previously installed flow and installing the subsequently received flow. Other mechanisms for (re)installing a flow with a subsequently received corresponding flow (e.g., with a different action for that flow) may be imagined, and are fully contemplated herein without loss of generality, and all such mechanisms will be contemplated under the terms reinstall or replace.

In one embodiment, the reception of a heartbeat message associated with an offloaded flow may be used to drive the determination of whether a policy (e.g., policy action) associated with that flow has changed. Specifically, when a heartbeat message associated with a (e.g., offloaded) flow is received at the firewall the flow associated with that heartbeat message can be determined. Additionally, it can be determined if the policy associated with that flow has changed. **If** the policy for that flow has changed, an updated policy flag (e.g., an indicator of some type) may be set in association with that flow. This determination and setting of the updated policy flag may, in certain cases, be accomplished in the data plane of the firewall. In these embodiments, when the firewall flow distribution agent on the firewall evaluates flows to determine flows to offload when the firewall flow distribution agent evaluates the flow it may determine that the policy update flag is set with respect to that flow and set the criterion associated with that flow such that it is selected for offloading (e.g., set the offload priority to the highest priority). Based on the set policy update flag or the updated criterion (e.g., the highest priority) for the flow, that flow can be selected for offload.

In particular embodiments, the determination that a policy associated with a flow has changed may be determined based on a policy version indicator associated with the policies maintained at the firewall. In particular, a firewall may receive an altered or updated (used interchangeably) policy (e.g., from a central management platform) and update that policy at the firewall. This alteration to the policy can comprise, for example, a different action associated with that policy.

When this policy is updated at the firewall (e.g., the action associated with the policy is updated), a policy version indicator may be updated (e.g., created or updated) indicating that the policy (or all policies at the firewall) has been updated at the firewall. This policy version indicator may, for example, comprise a global epoch indicator associated with the set of policies installed at the firewall. When the policy is updated this global epoch indicator may be incremented or otherwise altered to indicate that the set of policies installed at the firewall have changed.

Thus, when a flow is established at the firewall, flow data for that flow may include a policy identifier identifying the policy which the flow matched (and thus caused the flow to be established at the firewall) along with the (e.g., value of the) policy version indicator at the time the flow was established. As such, when a heartbeat message associated with an (e.g., offloaded) flow is received at the firewall, the flow established at the firewall associated with that heartbeat message can be determined. Additionally, from that established flow at the firewall it can be determined if the policy associated with that flow has changed using the policy version indicator by comparing the (value of the) policy version indicator associated with the established flow at the firewall (reflecting the state of the policies installed at the firewall at the time the flow was established) with the current (value of the) policy version indicator (e.g., reflecting a current state of the set of policies installed at the firewall).

If there is a mismatch between the policy version indicator stored in association with the established flow and the current policy version indicator (e.g., the current policy version indicator is greater than the stored policy version indicator associated with the established flow), it can be determined that the policies installed at the firewall have changed since that flow was established. If it is determined that the policies installed at the firewall have changed it can then be determined if the policy action associated with the specific policy associated with the established flow (e.g., the policy that was met when the flow was established) has changed.

Here, the policy identifier associated with the established flow can be utilized to access the associated policy of the set of policies installed at the firewall and the current action associated with that installed policy. The policy action stored in association with the established flow can then be compared against the current action associated with the policy to determine if the policy actions are different. **If** there is no difference then no action may need to be taken. If, however, there is a mismatch between the current action associated with the policy and the established flow, the action associated with the established flow may be updated to the current action associated with the identified policy and the policy update flag set with respect to that flow to ensure that the flow is selected for offload. Additionally or alternatively, a criterion associated with that flow may be adjusted such that it is selected for offloading (e.g., the offload priority is set to the highest priority).

Based on the set policy update flag or the adjusted criterion (e.g., the highest priority) for the flow, that flow will be selected for offload next time the set of flows established at the firewall are evaluated for offload, and an offload message created for that flow. This offload message includes that flow (e.g., the tuple defining that flow) and the current enforcement action associated with the (e.g., updated) policy. The offload message may also include the criterion (e.g., highest priority value) associated with the flow. The offload message may be sent to the network element associated with that flow (e.g., including the same network element to which that flow was originally offloaded). When the network element receives that offload message, the network elements may (e.g., re)install that flow at the network element with the current enforcement action associated with the policy (e.g., replacing the associated flow previously installed on the network element with the previous enforcement action for that policy).

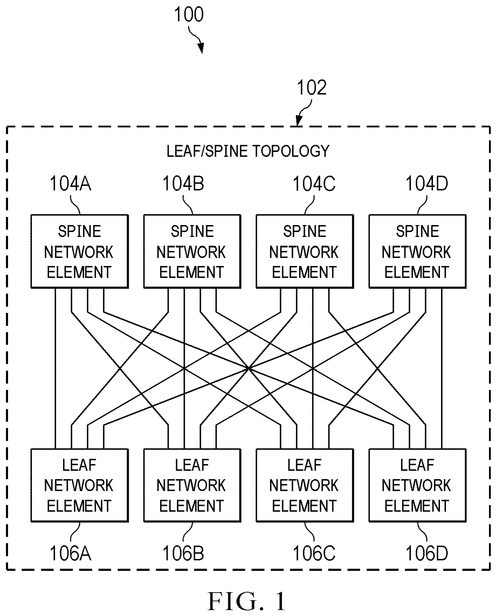

Initially, it may be helpful to an understanding of embodiments to discuss an example of a network architecture that may be useful in describing particular embodiments. Attention is thus directed now to FIGURE 1 which is an illustration of a network 100 having a leaf/spine topology 102 in which a set of spine network elements 104A-D are coupled to a set of leaf network elements 106A-D over a (e.g., multi-path) switching fabric. A leaf/spine topology 102 may be an alternate to a traditional three-layer core/aggregation/access network architecture. In certain cases, leaf network elements 106A-D mesh into the spine network elements 104A-D using a layer-3 (e.g., TCP/IP) protocol. Spine network elements 104A-D usually provide the core data connections for the network, while the leaf network elements 106A-D provide access to the network for host devices (e.g., servers, workstations, virtual machines). Routes through the network 100 may be, for example, configured in an active state through the use of Equal-Cost Multi-pathing (ECMP), allowing all connections to be utilized while avoiding loops within the network 100.

While leaf/spine network topologies as discussed with respect to FIGURE 1 may be used in describing embodiments herein, it will be understood that the use of such a leaf/spine topology in describing embodiment is for ease of description. Other embodiments may be utilized with equal efficacy in other network topologies and architecture. Additionally, while embodiments may be described in association with firewalls, the term firewall as utilized herein should be understood generally without limitation to refer to any element (physical or virtual) in a network that may be utilized to apply policies to control or otherwise manage traffic in a network.

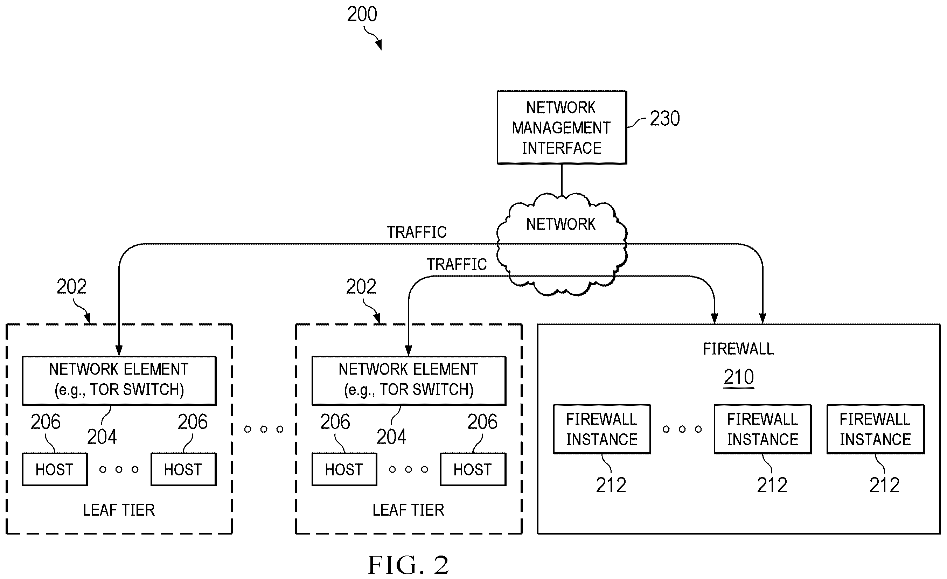

FIGURE 2 is a logical depiction of the use of a firewall in a (e.g., leaf/spine) network 200. Here, a set of leaf tiers 202 may each include a network element 204 that may be TOR switches or the like connected to one or more hosts 206 (e.g., servers, etc.). Each of these network elements 204 may also be connected to firewall 210. Firewall 210 may comprise one or more firewall instances 212. For example, firewall 210 may comprise a distributed firewall (e.g., a sharded or segmented firewall) such that a firewall may include one or more firewall instances 212. In a distributed firewall, the set of firewall instances 212 may cooperate to perform firewall functionality within the network 200.

Policies may be configured and installed on firewall 210 (e.g., at particular instances 212 of firewall 210) using a network management interface 230, which can be a cloud based network management interface or the like implemented at, for example, a network management system. These policies installed at the firewall 210 define a set of matching data along with an action (e.g., such as permit or deny). The matching data used to define the policy can be based on various criteria associated with traffic in network 200, such as source and destination IP addresses (e.g., including ranges or prefixes), port numbers (or ranges), protocols (e.g., a layer 4 (L4) protocol), and even data related to specific applications or services.

Accordingly, when traffic (e.g., packets) arrives at network elements 204 in the network 200, the network element 204 forwards this traffic to the firewall 210. The firewall 210 inspects traffic received from these network elements 204 to determine if that traffic matches a policy installed at the firewall 210. Namely, the firewall 210 may compare data obtained from, or associated with, a packet against the matching data of the installed policies to see if a policy is matched. The firewall can then enforce the corresponding action (e.g., permit or deny) for any matched policies.

In most cases, when a policy is matched, the firewall 210 may establish a flow at the firewall 210. Generally, a flow may be associated with a set of packets having a set of common attributes or characteristics. These attributes may be based on, for example, (i) one or more packet header field(s) (e.g., source or destination IP address), transport header field (e.g., source or destination port number), or application header field (e.g., RTP header fields); (ii) one or more characteristics of the packet itself (e.g., number of MPLS labels, etc.), (iii) one or more of the fields derived from packet treatment (e.g., nexthop **IP** address, the output interface, etc.), or other attributes associated with traffic in a network. A packet can thus be defined to belong to a flow if it has the attributes defining that flow.

The establishment of a flow at the firewall 210 may thus include storing a definition of the flow comprising a tuple (e.g., a set of data) defining that flow, such as a source **IP** (e.g., of a host 206 that is sending the traffic), a destination **IP** (e.g., of a host 206 that is the intended recipient of the traffic), a source port (e.g., associated with host 206 that sent the traffic), a destination port (e.g., specified for a recipient of the traffic), and a protocol (e.g., TCP/IP, UDP, etc.) associated with traffic corresponding to that flow. This establishment of the flow may also include storing the flow (i.e., the set of data defining the flow) in association with the action as determined from the matching policy. Thus, when traffic associated with the same flow is subsequently received at the firewall 210 (e.g., from a network element 204), that traffic can be matched against the installed flow and the corresponding action for the installed flow taken by the firewall 210.

As may be realized, packet inspection at a firewall is computationally expensive and the need for inspection of traffic by a firewall may increase (e.g., east-west) traffic in network 200 because of the need to transmit such traffic from network elements 204 to the firewall 210 for inspection. Administrators or operators of such networks may thus desire to reduce the computational burden placed on firewalls in a network while also reducing the commensurate increase in traffic necessitated by the need to transfer such traffic from other network elements to the firewall in order to enforce the policies.

In many cases, network elements 204 (e.g., TOR switches), may include hardware or software resources that are underutilized. What is desired, therefore, are systems and methods to improve firewall throughput by offloading policy enforcement from a firewall to other network elements while still maintaining the ability to enforce policies requiring packet inspection (e.g., stateful or L4 packet inspection), including the enforcement of policy actions made by a firewall in accordance with such packet inspection.

To those ends, among others, embodiments as disclosed herein may provide systems and methods for distributing policy enforcement in a network. Specifically, embodiments may allow the distribution of enforcement of policies from firewalls to other network elements. Thus, embodiments may allow the offloading of enforcement of actions for flows to network elements where those actions were determined for those flows by the firewall after packet inspection of those flows. This allows the enforcement of policy actions on flows determined from stateful inspection of flows at network elements that are not themselves capable of such stateful packet inspection, reducing traffic in the network and reducing the computational burden on the firewall.

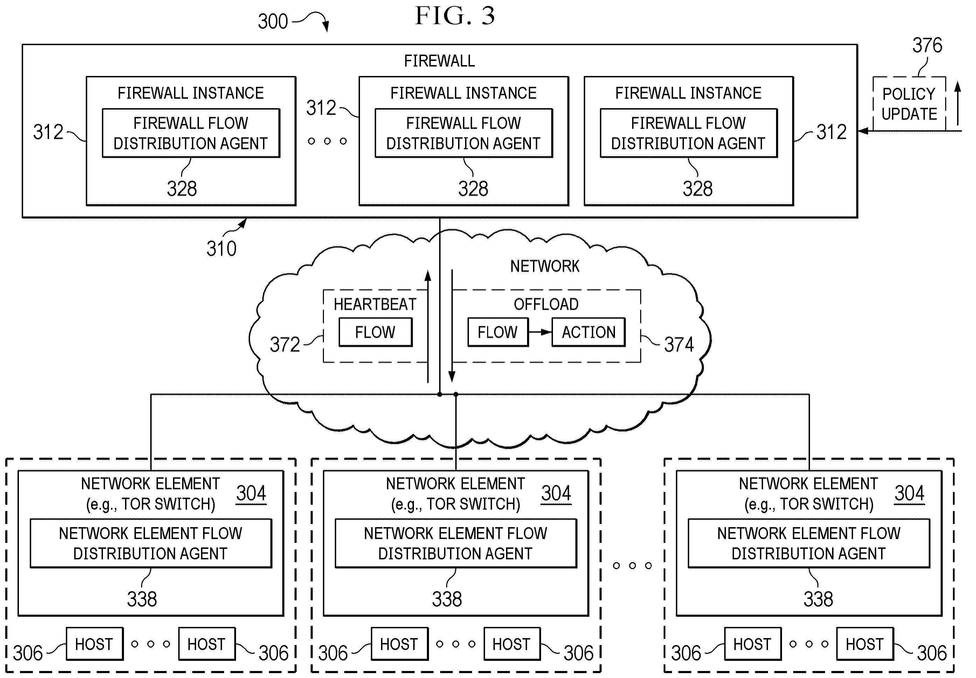

Looking now at FIGURE 3, a network architecture for the distribution of policy enforcement in accordance with one embodiment is depicted. Here, network system 300 may include firewall 310 comprising one or more firewall instances 312, where the firewall 310 may be coupled to one or more network elements 304 and each of those network elements 304 may be coupled to one or more hosts 306. For example, network system 300 can be implemented on a (e.g., layer-3) leaf/spine topology and includes a spine tier and a leaf tier, where each leaf tier includes one or more network elements 304. Each of the network elements 304 of a leaf tier can couple to one or more hosts 306.

A host 306 may include functionality to generate, receive, or transmit network traffic (e.g., packets or MAC frames). Examples of a host 306 include, but are not limited to, a server (e.g., a database server, a dynamic host configuration protocol (DHCP) server, an application server, a file server, a print server, a mail server, or any other server), a desktop computer, a mobile device (e.g., a laptop computer, a smartphone, a personal digital assistant (PDA), a tablet computer, or any other mobile device), or any other type of computing device. In one embodiment, each network element 304 can be configured as a TOR switch, although other configurations for these network elements 304 may be used in other embodiments (e.g., End of Row, etc.).

As discussed, policies may be installed at firewall 310 in network system 300 (e.g., installed at one or more firewall instances 312). Using these installed policies, the firewall 310 (e.g., each firewall instance 312) may make policy enforcement decisions (e.g., permit or deny) with respect to flows in the network. These policy enforcement decisions may result from applying these policies to traffic forwarded to the firewall from network elements 304 in the network. When these policy enforcement decisions are made the firewall 310 may establish the flow at the firewall 310, including storing the flow (i.e., the tuple defining the flow) in association with the determined action from a matching policy for the flow.

Network system 300 may include firewall flow distribution agent 328 at each of the one or more firewall instances 312 and network element flow distribution agent 338 on network elements 328, where the firewall flow distribution agent 328 and network element flow distribution agent 338 may cooperate to facilitate the offloading of the enforcement of policies installed at firewall 310 in conjunction with particular flows.

Specifically, according to one embodiment, firewall flow distribution agent 328 on the firewall 310 may evaluate flows established at the firewall at one or more points or intervals to determine one or more of these flows to offload to one or more network elements 304 in the network. The determination of which of the established flows at the firewall should be offloaded may be made using a heuristic (e.g., algorithm) based on an offload metric determined for the various flows established at the firewall 310. This offload metric may be based on one or more criteria, where that criterion may include a priority value associated with the flow. This priority value may be a highest weighted or overriding criterion) such that if that priority value is set to the highest priority it can be assured that the flow will be selected for offloading to a network element 304.

For a flow that the firewall flow distribution agent 328 has determined should be offloaded, an offload message 374 specifying that flow (e.g., the tuple defining that flow) and the enforcement action (e.g., as determined at firewall 310) may be sent to network element flow distribution agent 338 at network element 304. Network element flow distribution agent 338 on network element 304 may receive an offload message 374 from firewall 310 and install the flow and enforcement action specified by the offload message 374 at the network element (e.g., store the tuple defining the flow and the associated enforcement action), such that when traffic associated with that offloaded flow is received at the network element 304 (e.g., from host 306) the enforcement action may be applied by the network element 304. In this way the enforcement action for the offloaded flow as determined by the firewall 310 according to policies installed on firewall 310 may be applied at the network element 304 at that point without the network element 304 forwarding that traffic to the firewall 310.

In addition to enforcing the actions for such offloaded flows at the network element 304, in some embodiments the network element flow distribution agent 338 may periodically update the firewall flow distribution agent 328 on the state of these flows using a heartbeat message 372 or the like. According to one embodiment therefore, the network element flow distribution 338 on a network element 304 on which an offloaded flow is installed may monitor that flow to determine if traffic associated with that flow has (or has not) been received. If traffic associated with that flow is received (e.g., within a certain time period), network element flow distribution agent 338 may send heartbeat message 372 identifying that flow. When the firewall flow distribution agent 328 receives such a heartbeat message 372 it may update flow data associated with that flow at the firewall 310. For example, firewall flow distribution agent 328 may renew a flow session at the firewall associated with the flow specified in the heartbeat message 372. As such if no heartbeat message 372 is received for a flow installed at the firewall 310, that flow may expire at the firewall 310.

As discussed, the offloading of the enforcement of policies in this manner may have issues related to the synchronicity of policy enforcement across the network. To illustrate, firewall 310 may receive a policy update 376 (e.g., from a network management interface or the like) may change, for example, an action for that policy. This policy may thus be updated at firewall 310 (e.g., one or more firewall instances 312). However, there may be offloaded flows associated with this updated policy where those flows were offloaded to network elements 304 before the policy update 376 was received. Moreover, when those flows were previously offloaded the previous (e.g., pre-update) action associated with that policy was specified for those flows.

There are thus at least two related issues that present in these types of scenarios. The first issue is that traffic for these flows may not be received at the firewall 310 and thus the current (e.g., updated) action for that policy may not be enforced on that traffic by the firewall 310. Commensurately, the second issue is that the previous (pre-update) action associated with the policy is being enforced for those previously offloaded flows associated with that updated policy at the network elements 304 to which those flows were offloaded. This situation exists because at the point the flow meeting that changed policy (e.g., and the policy action) were initially offloaded by the firewall 310 to the network elements 304, the action associated with the policy was the previous (e.g., old) action. The network element 304 to which the flow meeting that updated policy was offloaded may thus continue to enforce that stale policy action for traffic of that flow, despite that the action for that policy has been altered by the policy update 376.

Accordingly, embodiments of firewall 310 (e.g., firewall instances) may be adapted to determine that a policy (e.g., a policy action) associated with an offloaded flow has changed and set a policy update indicator indicating that the policy has changed. The firewall 310 may also be adapted to adjust or set a criterion (e.g., a priority level) associated with the flow used to determine the offload metric associated with the flow (e.g., the priority associated with the flow may be set to the highest priority). Moreover, the action associated with the offloaded flow can be updated to the current action associated with the policy.

In one embodiment, the reception of a heartbeat message 372 associated with an offloaded flow may be used to drive this determination of whether a policy (e.g., policy action) associated with that flow has changed. Thus, when heartbeat message 372 is received for a flow, firewall 310 (e.g., firewall instance 312) may determine whether the policy associated with the flow identified by heartbeat message 372 has changed, and specifically whether the enforcement action associated with that policy has changed. **If** the policy action has changed, that installed flow at the firewall 310 may be updated with the current policy action for the policy, a policy update indicator associated with the flow set, and the criterion (e.g., priority level) associated with the installed flow set accordingly (e.g., to the highest priority level).

In this manner, when the firewall flow distribution agent 328 on the firewall 310 (e.g., at a firewall instance 312) evaluates these flows to determine flows to offload to network elements 304 in the network 300, the offload metric determined for flows associated with changed policies (e.g., flows associated with the policy updated by policy update 376), will ensure that the flow associated with the changed policy is selected to offload. Moreover, when the flow is offloaded, the current action associated with that updated policy will be included in the offload message 374 such that this current action can be enforced with respect to that offloaded flow at the network element 304.

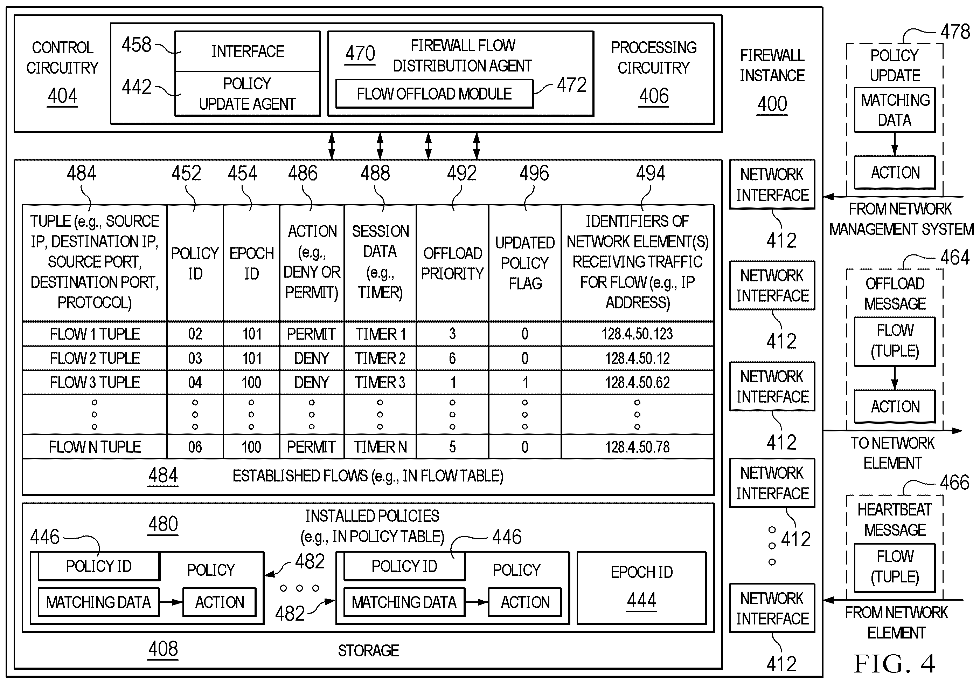

FIGURE 4 depicts a firewall instance adapted for offloading policy enforcement for flows in a network according to an embodiment. Firewall instance 400 may be a physical or virtual instance implemented on a computing device. Accordingly, firewall instance 400 may receive data, including network traffic (e.g., packets or the like), via an input/output (I/O) path. This I/O path may provide traffic data to control circuitry 404, which includes processing circuitry 406 and storage (i.e., memory) 408. Control circuitry 404 may send and receive commands, requests, and other suitable data using the I/O path where the I/O path may connect control circuitry 404 (and specifically processing circuitry 406) to one or more network interfaces 412 to which other elements of a network (e.g., switches, routers, hosts, etc.) can be connected. These network interfaces 412 may be any type of network interface, such as an RJ45 ethernet port, a coaxial port, etc.

Control circuitry 404 includes processing circuitry 406 and storage 408. As referred to herein, processing circuitry should be understood to mean circuitry based on one or more microprocessors, microcontrollers, digital signal processors, programmable logic devices, field-programmable gate arrays (FPGAs), application-specific integrated circuits (ASICs), etc., and may include a multi-core processor (e.g., dual-core, quad-core, hexa-core, octa-core, or any suitable number of cores). In some embodiments, processing circuitry 406 is distributed across multiple separate processors or processing units, for example, multiple of the same type of processing units or multiple different processors. The circuitry described herein may execute instructions included in software running on one or more general purpose or specialized processors.

Storage 408 may be an electronic storage device that includes volatile random-access memory (RAM) which does not retain its contents when power is turned off, and non-volatile memory, which does retain its contents when power is turned off. As referred to herein, the phrase "electronic storage device" or "storage device" or "memory" should be understood to mean any device for storing electronic data, computer software, instructions, or firmware, such as RAM, ROM, content-addressable memory (CAM) (including a TCAM), hard drives, optical drives, solid state storage devices, quantum storage devices, or any other suitable fixed or removable storage devices, or any combination of the same.

Firewall instance 400 is adapted to offload the enforcement of actions for flows to network elements where those actions were determined for those flows by the firewall instance 400 (e.g., after packet inspection of those flows). This allows the enforcement of policy actions on flows determined from stateful inspection of flows at network elements (including network edge elements) that are not themselves capable of such stateful packet inspection, reducing traffic in the network and reducing the computational burden on the firewall.

To illustrate in more detail, instructions may be executing on processing circuitry 406 for providing interface 458 through which policies 482 may be installed at the firewall instance 400. Interface 458 may be included in, for example, a policy update agent 442 at firewall instances adapted to manage (e.g., install, create, update, etc.) policies at the firewall instance 400. This interface 458, can for example, be an interface for a network management system (or a user thereof) through which such policies 482 can be received (e.g., an instruction to install a policy 482 on firewall instance 400 may be received from a network management system through interface 458). **In** particular, policies 482 can be defined by users (e.g., administrators) of a network using an interface associated with network management such as that offered by a cloud based network management system. The policies 482 are thus defined using a set of matching data along with an action (e.g., such as permit or deny). These defined policies 482 may be received through interface 458 and installed by policy update agent 442 on the firewall instance 400 (e.g., stored in storage 408 of the firewall instance 400).

Moreover, installed policies 482 may be updated through interface 458. Specifically, firewall instance 400 may receive (e.g., from a network management system) a policy update 478 comprising an altered or updated policy (e.g., an updated action for a policy 482) and update that installed policy 482 at firewall 400. For example, when such a policy update 478 is received, policy update agent 442 may locate the installed policy 482 at the firewall instance 400 and update that installed policy 482 (e.g., the action of that policy 482) associated with the policy update 478.

In one embodiment, installed policies 482 may be stored in policy table 480 in storage 408 (for purposes of this disclosure the term table will be understood to mean, without loss of generality, any suitable data structure or data storage format on any suitable data storage medium). Each of the installed policies 482 in the policy table 480 may be associated with a policy identifier 446 (e.g., uniquely) identifying that policy 482. Additionally, there may be an epoch identifier 444 associated with policy table 480. This epoch identifier 444 may be updated (e.g., incremented) when changes are made to policy table 480. Specifically, when an update is made to policy table 480 such as by installing a new policy or updating (e.g., an action for) a previously installed policy 482 in policy table 480 the policy update agent 442 may update this epoch identifier 444.

Using these installed policies, firewall instance 400 may make policy enforcement decisions (e.g., permit or deny) with respect to flows in the network with which it is being utilized. These policy enforcement decisions may result from firewall instance 400 applying these policies 482 to traffic forwarded to the firewall instance 400 from network elements in the network. When these policy enforcement decisions are made, the firewall instance 400 may establish one or more corresponding flows 484 at the firewall instance 400. These flows 484 may be installed in a flow table or the like at the firewall (e.g., again the term table will be understood to mean, without loss of generality, any suitable data structure or data storage format on any suitable data storage medium). Thus, when traffic associated with the same flow 484 is subsequently received, that traffic can be matched against the installed flow 484 and the corresponding action 486 for the installed flow 484 taken by the firewall instance 400.

Establishing the flow may comprise storing the flow 484 (i.e., the tuple defining the flow) in association with flow data for the flow 484 including a determined action 486 from a matching traffic control policy for the flow 484 along with the policy identifier 452 of the installed policy 482 that matched the flow 484 (e.g., that matched the traffic for the flow and caused the flow to be established at the firewall 400). This policy identifier 452 may thus be the policy identifier 446 associated with the installed policy 482 matching that flow 484 in policy table 480. Additionally, flow data for an established flow 484 may include an epoch identifier 454 associated with the established flow. This epoch identifier 454 may be the value of epoch identifier 444 associated with policy table 480 at the time that flow 484 was established at the firewall 400.

The flow data associated with each of the established flows 484 may also include a session (e.g., session data) 488. The session 488 may be a stateful session (e.g., for TCP flows) that have a start and end time or keepalive timer, or may be stateless session (e.g., for UDP flows) that may have a timer and associated expiration time. In this manner, it can be determined when a session 488 for a flow 484 has ended based upon a timer associated with the session 488 for that flow 484. This timer may have, for example, an age out period whereby if the timer is not reset before expiration of the age out period the session 488 may be deemed as ended or inactive and the flow 484 removed from firewall instance 400 (e.g., removed from storage 408).

Firewall flow distribution agent 470 executing on processing circuitry 406 may include flow offload module 472. At one or more points or intervals, flow offload module 472 may evaluate flows 484 established at firewall instance 400 to determine if any of these flows 484 should be offloaded to other network elements. The determination of which of the established flows 484 at the firewall instance 400 should be offloaded may be made using a heuristic (e.g., algorithm) based on an offload metric. This offload metric may be based on almost any criteria desired, including determined data or a prediction associated with the flow 484, or a priority 492 associated with the flow, where the prediction may be statically assigned or algorithmically determined. The offload metric could be, based on an amount of traffic for that flow (or meeting that policy) that is received at the firewall, a quality of service indicator associated with the policy, that a user has designated or specified that a policy should be offloaded, or some other criteria. In one embodiment, the flow data associated with an established flow 484 may include an updated policy flag 496. This updated policy flag 496 or the priority value 492 associated with the flow 484 may be a highest weighted or overriding criterion such that if the updated policy flag is set or the priority value 492 is set to the highest priority it can be assured that the flow will be selected for offloading to a network element.

For a flow that flow offload module 472 has determined should be offloaded, an offload message 464 including that flow (e.g., the tuple defining that flow, such as a source IP, a destination **IP,** a source port, a destination port, and a protocol) and the enforcement action (e.g., permit or deny) may be sent to a network element for offload. As discussed, in some embodiments, a (e.g., offload) priority 492 may be associated with flows 484 installed at the firewall instance 400. In cases where such a priority is maintained in association with flows 484 this priority 492 may be included in an offload message 464 so that priority may be utilized by network elements receiving such an offload message 464 (e.g., to install these flows at the network elements according to these priority values).

In one embodiment, the offload message 464 may only be sent to, or obtained by, network elements involved with the flow 484 being offloaded, such as the network element at which traffic for that flow 484 is received from the device (e.g., host) sending traffic of that flow 484. To illustrate in more detail, network elements and the firewall instance 400 may serve as virtual tunnel end points (VTEP). Thus, when traffic of a flow 484 is initially redirected to the firewall instance 400 from a network element (e.g., a network edge element), this redirected traffic may be encapsulated in a VXLAN tunnel implemented in the network. Thus, the encapsulating packet for redirecting that traffic from that network element to the firewall instance 400 through a VXLAN tunnel may include, as the source IP address (e.g., for that VXLAN packet), the IP address of the network element that redirected the traffic for that flow to the firewall instance 400. As such, when a flow 484 is established at the firewall instance 400 (e.g., based on the inspection for traffic for that flow and any matching policies 482 at the firewall instance), that established flow 484 may be associated with an identifier 494 of any network elements that may be receiving traffic associated with that flow (e.g., an **IP** address of the network element that receives traffic for that flow 484 as determined from the source **IP** address of the VXLAN encapsulation packet including the redirected traffic for that flow 484).

Accordingly, when the flow offload module 472 at the firewall instance 400 determines a flow 484 should be offloaded, the flow offload module 472 can determine the identifier 494 (e.g., IP address) of the network element associated with the flow 484 to which an offload message 464 for that flow 484 should be sent. The offload message 464 for that flow 484 can thus be directed specifically to that network element. In one embodiment, for example, these offload messages 464 may be distributed to network elements according to a publish subscribe distribution architecture (e.g., a mounting framework). The flow offload module 472 can, for example, publish offload messages 464 in association with the identifiers 494 (e.g., to a channel, location, queue, etc. associated with the identifier 494 of any network elements associated with the flow 484 being offloaded).

After sending an offload message 464 for a flow 484, the firewall instance 400 may update session 488. Specifically, the firewall instance 400 may update a session 488 for a flow 484 based on traffic for that flow 484 as received at firewall instance 400 (e.g., when it is redirected from a network element). The firewall instance 400 may also update session 488 for a flow 484 based on a received heartbeat message 466 specifying that flow 484 (e.g., including the tuple identifying that flow 484)

Such a heartbeat message 466 may be generated by a network element on which that flow is installed. The updating of the session for a flow 488 may include renewing the session 488 associated with the flow 484 (e.g., resetting, recalculating, or renewing the timer associated with the session 488 for that flow 484). As such, if no traffic associated with a flow 484 is received at the firewall instance 400 and no heartbeat message 466 is received at the firewall instance 400 specifying that flow 484 the session 488 for that flow 484 will naturally age out (e.g., expire) and be removed from established flows 484 at the firewall instance 400.

In one embodiment, the reception of heartbeat message 466 associated with an offloaded flow may be used to drive a determination of whether an installed policy 482 (e.g., policy action) associated with that offloaded flow has changed such that the flow (associated with the changed policy 482) may be designated for offload. Specifically, when heartbeat message 466 associated with an (e.g., offloaded) flow is received at firewall instance 400 the established flow 484 associated with that heartbeat message 466 can be determined by firewall 400 (e.g., based on data associated with the flow included in the heartbeat message). Additionally, it can be determined if the installed policy 482 associated with that determined flow has changed. **If** the policy for that flow has changed, an updated policy flag 496 (e.g., an indicator of some type such as a bit or the like) may be set in association with that flow 484. This determination and setting of the updated policy flag may, in certain cases, be accomplished in the data plane of firewall 400 (e.g., implemented by processing circuitry 406).

In particular embodiments, the determination that policy 482 associated with flow 484 corresponding to received heartbeat message 466 has changed may be based on epoch identifier 454 associated with that flow 484. Specifically, when heartbeat message 466 is received at firewall 400 (e.g., and is being processed in the data plane of the firewall 400 the flow 484 established at the firewall 400 that is associated with that received heartbeat message 466 can be determined. Additionally, from that determined established flow 484 it can be determined if the installed policy 482 associated with that flow 484 has changed using the epoch identifier by comparing the (value of the) epoch identifier 454 associated with the established flow 484 (e.g., reflecting the state of policy table 480 at the time the flow 484 was established based on the matching policy 482) with the current (value of the) epoch identifier associated with policy table 480 (e.g., reflecting a current state of policy table 480).

If there is a mismatch between the epoch identifier stored in association with the established flow 484 and the current epoch identifier associated with the policy table 480 (e.g., the current epoch identifier is greater than the stored epoch identifier 454 associated with the established flow 484), it can be determined that the policies 482 installed at the firewall 400 have changed since that flow 484 was established at the firewall 400. **If** it is determined that the policies 482 installed at the firewall 400 have changed the firewall 400 can then determine if the policy action associated with the specific policy 482 associated with the established flow 484 corresponding to heartbeat message 466 (e.g., the policy 482 that was met when the flow 484 was established) has changed.

Here, the policy identifier 452 associated with the established flow 484 can be utilized to access the associated policy 482 of the set of policies in policy table 480 installed at the firewall 400 (e.g., having the same policy identifier 446) and the current action associated with that associated installed policy 482 determined. The policy action 486 stored in association with the established flow 484 can then be compared against the current action associated with the policy 482 in policy table 480 to determine if the policy actions are different. If there is no difference then no action may need to be taken. If, however, there is a mismatch between the current action associated with the installed policy 482 in policy table 480 and the established flow 484, the action 486 associated with the established flow 484 may be updated to the current action associated with the identified policy 482 as installed in policy table 480. Additionally, an updated policy flag 496 (e.g., an indicator of some type such as a bit or the like) may be set in association with that flow 484 indicating the policy 482 associated with the flow 484 has changed. This determination and setting of the updated policy flag 496 may, in certain cases, be accomplished in the data plane of the firewall.

Thus, when flow offload module 472 next evaluates flows 484 established at firewall instance 400 to determine if any of these flows 484 should be offloaded to other network elements, flow offload module 472 will determine that this flow 484 is associated with a (e.g., set) updated policy flag 496 and should thus be offloaded. Flow offload module 472 may then set the offload priority 492 associated with that flow 494 to the highest priority, select that flow for offload and generate an offload message 464 including that flow 484 and the updated policy action associated with the policy 482 corresponding to that flow 484. Additionally, flow offload module 472 may (re)set the updated policy flag 496 (e.g., so it does not indicate that an associated policy 482 for that flow 484 has changed).

The offload message 464 generated by flow offload module 472 for that flow 484 may thus include the (e.g., highest value) for the offload priority 492 associated with this flow so that this priority may be utilized by network elements receiving the offload message 464 (e.g., to install that flow 484 at the network element according to that priority value). Thus, when the network element to which the flow 484 is offloaded (e.g., as identified by network element **ID** 494) receives that offload message 464, the network elements may (e.g., re)install that flow 484 at the network element with the current (updated) enforcement action associated with the policy 484 based on this highest priority (e.g., replacing the associated flow previously installed on the network element with the previous enforcement action for that policy).

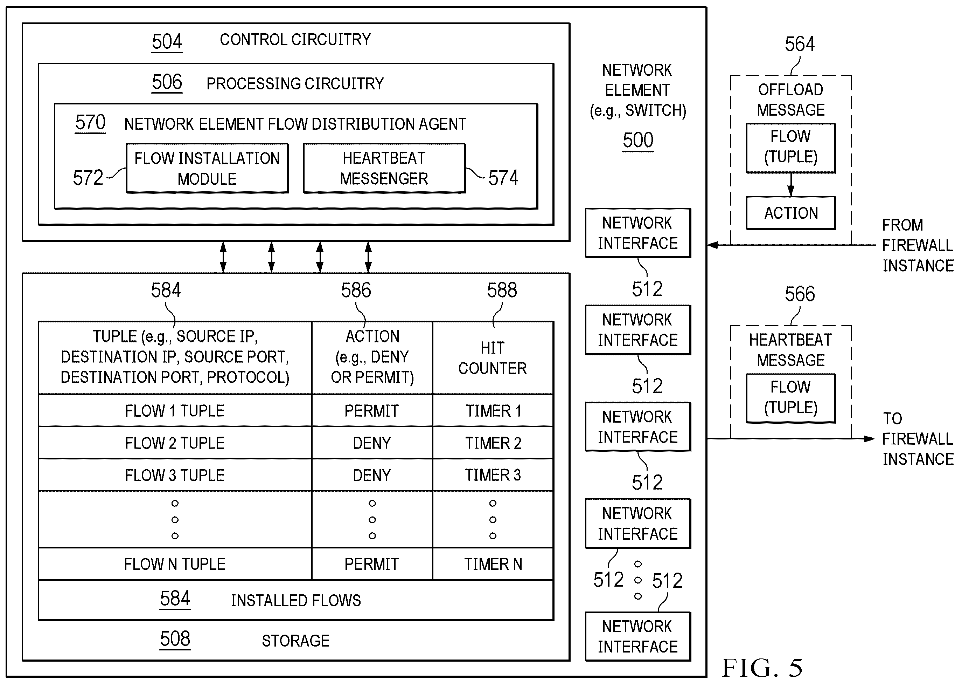

Moving now to FIGURE 5, one embodiment of a network element adapted for offloading policy enforcement for flows in a network is depicted. Network element 500 may be, for example, a (e.g., TOR) switch, router or other physical or virtual network element implemented on a computing device. Accordingly, network element 500 may receive data, including network traffic (e.g., packets or the like) through network interface 512, and include control circuitry 504, processing circuitry 506 and storage (i.e., memory) 508 for use in processing such network traffic.

Network element 500 is adapted to receive a flow for offload along with a corresponding action as determined for that flow from a firewall instance and install that flow at the network element 500. By installing the flow at the network element 500 the network element 500 can enforce the action as determined for that flow by a firewall instance. As the network element 500 can enforce actions for flows installed at that network element 500 in association with traffic for that flow received at the network element (e.g., without forwarding such traffic to a firewall instance), the enforcement of actions determined from stateful inspection of flows at a firewall may be undertaken by the network element 500 even when the network element 500 is itself incapable of such stateful packet inspection. Such a capability thus serves to reduce traffic in the network and reduce computational burden on the firewall instance.

Network element flow distribution agent 570 executing on processing circuitry 506 may thus receive an offload message 564 from a firewall instance, where that offload message 564 may specify a flow (e.g., a tuple defining that flow, such as a source IP, a destination IP, a source port, a destination port, and a protocol) and an enforcement action (e.g., permit or deny). The offload message 564 may also include a (e.g., offload) priority associated with the flow specified in the offload message 564.

In one embodiment, for example, when initializing (or re-initializing, booting, or at some other point) the network element, network element flow distribution agent 570 on network element 500 may subscribe to messages associated with an identifier of that network element 500 (e.g., an IP address of that network element 500). For example, the network element may send a subscription notification including the identifier (e.g., IP address) of the network element 500 to each firewall instance subscribing to messages for the identifier of that network element 500. Accordingly, when an offload message 564 is published by a firewall instance in association with the identifier (e.g., **IP** address) for that network element 500 that offload message 564 may be received (or otherwise obtained) by that network element 500.

A network element flow distribution agent may thus receive an offload message 564 (e.g., an offload message published to its IP address), and install the flow 584 and enforcement action 586 specified by the offload message 564 at the network element 500 (e.g., store the tuple defining the flow and the associated enforcement action), such that when traffic associated with that installed flow 584 is received at the network element 500 the enforcement action 586 may be applied by the network element 500. In this manner, the enforcement action 586 for the flow 584 may be applied at the network element 500 without the network element 500 forwarding that traffic to the firewall.

According to one embodiment, when an offload message 564 is received, a determination of whether the flow specified in the offload message 564 is to be installed may be made, and that flow is installed at the network element 500 only if it is determined that that specified flow is to be installed. Flow installation module 572 of network element flow distribution agent 570 can make such a determination. In one embodiment, flow installation module 572 may use a best effort methodology with respect to the flow specified in offload messages 564, and may make an (e.g., independent) determination whether the flow specified in offload message 564 should (or should not) be installed at the network element 500. The determination whether to (or not to) install a flow at network element 500 may be made based on a wide variety of criteria including priorities associated with the flow as received in the offload message 564 or determined at the network element, hardware resources associated with, or available at, the network element 500, or other factors.

When flow installation module 572 determines that the flow specified in offload message 564 should be installed at network element 500, network element flow distribution agent 570 may install the flow at the network element 500. The installation of the flow can include storing the flow 584 (i.e., the tuple defining the flow) in association with the determined action 586 as specified in the offload message 564 being processed by the network element flow distribution agent 570. Once the flow 584 is installed at network element 500 when traffic associated with that flow 584 is subsequently received at that network element 500, the network element flow distribution agent 570 may determine that the flow 584 is installed at the network element 500 and take the enforcement action specified in association with that flow 584 without redirecting the traffic for that flow 584 to a firewall.

Network element flow distribution agent 570 may also include heartbeat messenger 574 for updating firewall instances on the state of installed flows 584 using a heartbeat message 566. According to one embodiment therefore, heartbeat messenger 574 may maintain a hit counter 588 associated with each flow 584 installed at the network element 500. Each time traffic (e.g., a packet) associated with that flow 584 is received at the network element 500 the heartbeat messenger 574 may increment (or otherwise update) this hit counter 588 associated with the flow 584. This hit counter 588 may be reset at a heartbeat interval. The period of this heartbeat interval may be fixed or algorithmically determined based on a heuristic where the heuristic used to determine such a heartbeat interval can, for example, be a function based on an age out time for flow sessions on a firewall in the network. At the expiration of this heartbeat interval then, if the hit counter for a flow is non-zero a heartbeat message 566 (e.g., a keepalive message) specifying that flow 584 (e.g., including the tuple defining that flow) may be sent to the firewall (e.g., one, multiple, or all firewall instances).

In one embodiment, such as where a firewall in the network may be implemented in multiple instances, a heartbeat message 566 may not only specify the flow 584 (e.g., include the tuple defining the flow) but may additionally specify identifying information associated with network element 500 on which the flow 584 is installed (e.g., the network element 500 sending the heartbeat message 566). This network element identifying information can, for example, be included in a field of a header of a packet including the heartbeat messages 566 and may be, for example, a MAC address of the network element 500 or another type of identifier for the network element 500.

In this manner, in cases where a firewall comprises multiple firewall instances, the heartbeat message 566 may be routed to the appropriate firewall instance (e.g., the firewall instance responsible for processing traffic for that network element 500 or from which that flow 584 was offloaded to that network element 500). For example, a load balancer balancing traffic between different firewall instances may utilize network element identifying information in the heartbeat message 566 to load balance the heartbeat message 566 from the network element 500 to a correct firewall instance without having to store any additional state at the load balancer or perform any additional parsing or packet processing (e.g., greater than what would be required for standard load balancing to those firewall instances).

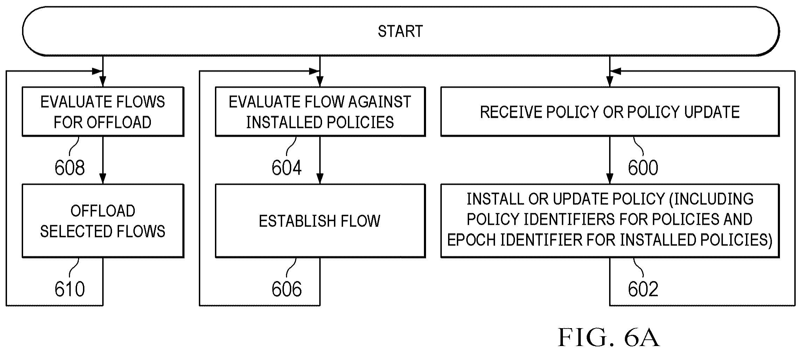

FIGURES 6A-6C depict embodiments of methods for offloading policy enforcement for flows from a firewall (or other network element) including updating those offloaded flows based on updated policies. Referring first to FIGURE 6A, one embodiment of a method for installing or updating policies at a firewall (or other network element), establishing flows at the firewall based on those policies, and offloading those flows from the firewall, is depicted. Specifically, as the firewall is operating, policies to be installed or policy updates comprising an altered or updated policy (e.g., including a different policy action for that policy) may be received (STEP 600). This policy may then be installed (e.g., initially) or updated at the firewall (STEP 602). For example, when a policy update is received, a corresponding installed policy at the firewall may be determined and the policy action associated with the installed policy may be updated.

Each of the installed policies may be associated with a policy identifier (e.g., uniquely) identifying that policy. Additionally, when a policy is installed or updated, an epoch identifier associated with the set of policies installed at the firewall may be updated (e.g., incremented) to indicate that set of policies installed on the firewall have changed (e.g., relative to the set of policies associated with a different epoch identifier).

The policies installed at a firewall may be evaluated against flows (e.g., traffic associated with those flows) at the firewall (STEP 604). When policy enforcement decisions are made for a flow, the firewall may establish the flow at the firewall (STEP 606), including storing the flow in association with the determined action from a matching policy for the flow. At one or more points or intervals, the flows established at the firewall may be evaluated to select flows to be offloaded to another network element (STEP 608) and these selected flows offloaded to these other network elements (STEP 610).

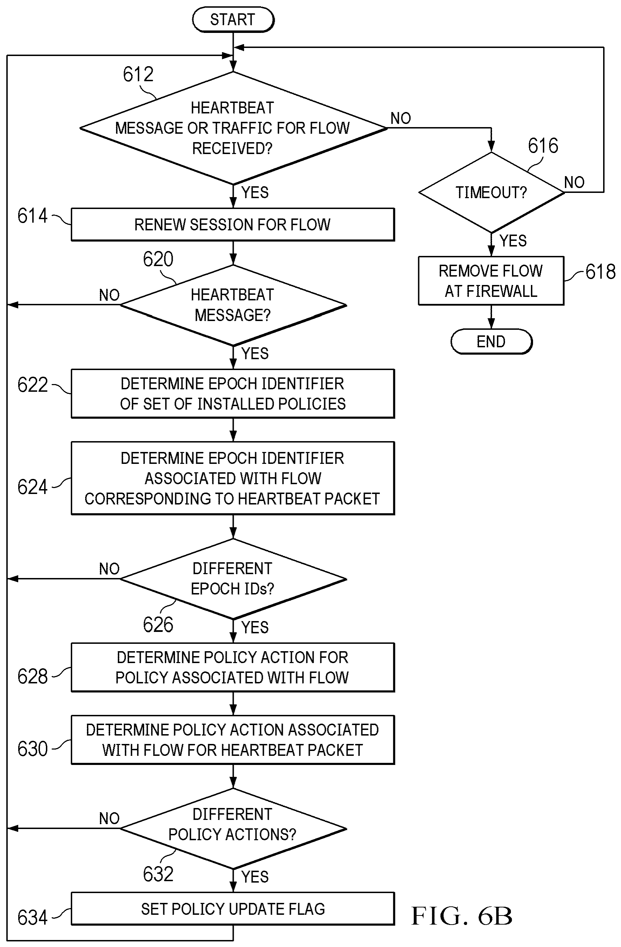

Moving now to FIGURE 6B, one embodiment of identifying altered policies associated with offloaded flows based on a heartbeat message for those flows received at a firewall (or other network element) is depicted. After a flow is established, traffic for that flow may be received. Alternatively, or additionally, a heartbeat message specifying that flow may be received (e.g., if that flow has been offloaded to another network element). When such traffic or heartbeat messages are received (Y Branch of STEP 612) a session associated with that flow can be renewed (STEP 614). As such, if no traffic or heartbeat message is received for an established flow (N Branch of Step 612) (e.g., within a timeout period STEP 616) the session will not be renewed and will eventually expire. The flow can then be removed at the firewall (STEP 618).

When a heartbeat message specifying a flow is received (Y Branch of STEP 620) it can be determined if the policies have changed since the specified flow was established at the firewall. In one embodiment, therefore, the (e.g., current) epoch identifier for the set of installed policies at the firewall can be determined (STEP 622). Additionally, the epoch identifier associated with the flow established at the firewall corresponding to the received heartbeat packet can also be determined (STEP 624). The (value of the) epoch identifier associated with the established flow (e.g., reflecting the state of policies at the time the flow was established) can be compared with the current (value of the) epoch identifier associated with the set of installed policies on the firewall (STEP 626).

If there is a mismatch between the epoch identifier stored in association with the established flow and the current epoch identifier associated with the set of policies (Y Branch of STEP 626), it can be determined that the policies installed at the firewall have changed since that flow was established at the firewall. If it is determined that the policies installed at the firewall have changed (Y Branch of STEP 626) the (e.g., current) policy action associated with the policy corresponding to the flow can be determined (STEP 628) along with the policy action associated with the established flow (STEP 630) (e.g., the policy action associated with the flow at the time the flow was established). This determination can be made, for example, based on a policy identifier associated with the established flow indicating the policy that caused that flow to be established and policy identifiers associated with the policies installed at the firewall.

If there is no difference between these policy actions then no action may need to be taken. If, however, there is a mismatch between the current action associated with the installed policy and the action associated with the established flow corresponding to the heartbeat message (Y Branch of STEP 632), the action associated with the established flow may be updated to the current action associated with the identified installed policy. Additionally, an updated policy flag indicating the policy associated with the flow has changed may be set in association with that flow (STEP 634).

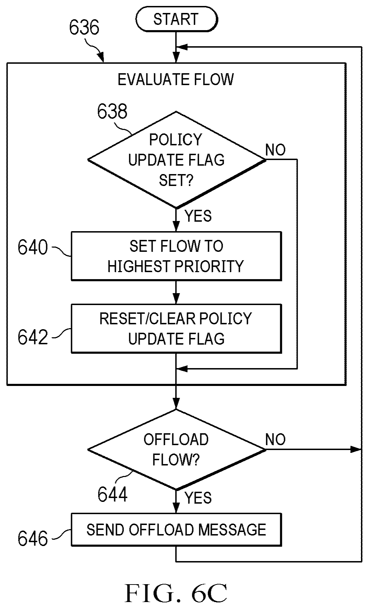

FIGURE 6C depicts an embodiment of a method that a firewall (or other network element) may utilize to offload flows, including the updating of such offloaded flows based on an associated changed policy. It will be noted that this method may be utilized in association of a method for identifying altered policies associated with offloaded flows based on heartbeat message for those flows (e.g., one embodiment of which is presented in FIGURE 6B), and that these methods may be utilized either asynchronously or synchronously with respect to one another.

According to one embodiment, therefore, at one or more points or intervals each flow established at the firewall may be evaluated to determine if that flow should be offloaded to another network element (STEP 636). When a flow is evaluated for offloading it can be determined if the updated policy flag associated with that flow is set (e.g., indicates in some manner that the policy associated with that flow has changed since the flow was installed or offloaded (STEP 638). If an updated policy flag associated with that flow is set that flow may be designated for offload. The priority of that flow may also be set to the highest priority (STEP 640). In one embodiment, the setting of the priority of the flow to the highest priority may serve to designate the flow for offload. Additionally, the policy update flag may be reset or otherwise cleared (e.g., removed or otherwise modified such that the policy update flag does not indicate that the policy associated with that flow has changed since the flow was installed or offloaded) (STEP 642).

When it is determined that the flow should be offloaded (Y Branch of STEP 644), an offload message including that flow (e.g., the tuple defining that flow, such as a source IP, a destination IP, a source port, a destination port, and a protocol) and the enforcement action (e.g., permit or deny) may be sent (STEP 646). In this manner, when flows are evaluated to determine flows to offload to network elements in the network, the set policy update flag associated with flows corresponding to altered policies (e.g., which may have been set based on a received heartbeat message from a network element to which that flow has been offloaded) will ensure that the flow associated with the changed policy is selected to offload. Moreover, when the flow is offloaded, the current action associated with the updated policy associated with that flow will be associated with that flow such that this current action can be enforced with respect to that flow at the network element.

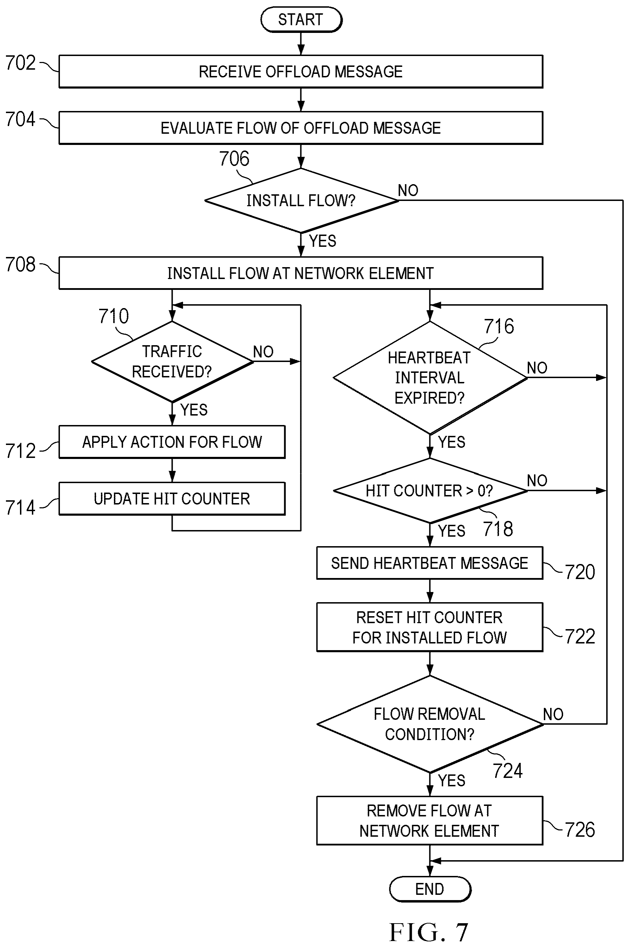

Referring then to FIGURE 7, one embodiment of a method for offloading policy enforcement for flows to a network element is depicted. Initially a network element may receive an offload message specifying a flow and an action (STEP 702). A determination whether the flow specified in offload messages should (or should not) be installed at the network element may be made (STEP 704). Such a determination may be made using a best effort methodology whereby the flow is evaluated based on a set of criteria associated with the flow, the network element, the network (e.g., traffic), etc., including a priority associated with the flow as may be included in the offload message. If it is determined that the flow should be installed (Y Branch of STEP 706), the flow may be installed at the network element (STEP 708). This installation of the flow may include storing the flow in association with the determined action as specified in the offload message.

Accordingly, when traffic associated with that flow is subsequently received at that network element (Y Branch of STEP 710), the action specified in association with that flow may be applied (STEP 712) (e.g., without redirecting the traffic for that flow to the firewall). Moreover, a hit counter associated with the flow may be updated based on the reception of traffic for the flow (STEP 714). This update may cause the hit counter to indicate in some manner that traffic for that flow was received.

Additionally, once a flow is installed at a network element a heartbeat interval timer associated with a heartbeat interval may be maintained in association with the flow. The period of this heartbeat interval may be fixed or algorithmically determined based on a heuristic (e.g., based on an age out time for flow sessions on the firewall in the network). At the expiration of this heartbeat interval then (Y Branch of STEP 716), if the hit counter for a flow is non-zero (or otherwise indicates traffic for the flow was received at the network element during the heartbeat interval) (Y Branch of STEP 718), a heartbeat message specifying that flow may be sent to the firewall (STEP 720). The hit counter for that flow can then be reset (STEP 722).

In some cases, if the hit counter for a flow is zero at the end of a heartbeat interval (e.g., no traffic was received during the heartbeat interval) (N Branch of STEP 718), it can be determined if a flow removal condition has been met (STEP 724). This flow removal condition may be, for example, that no traffic has been received for a flow for a certain number (e.g., one or more) heartbeat intervals). If the flow removal condition is met (Y Branch of STEP 724), the flow may be deinstalled (e.g., removed) at the network element (STEP 726).

It will be understood that while specific embodiments have been presented herein, these embodiments are merely illustrative, and not restrictive. Rather, the description is intended to describe illustrative embodiments, features, and functions in order to provide an understanding of the embodiments without limiting the disclosure to any particularly described embodiment, feature, or function, including any such embodiment, feature, or function described. While specific embodiments of, and examples for, the embodiments are described herein for illustrative purposes only, various equivalent modifications are possible within the spirit and scope of the invention, as those skilled in the relevant art will recognize and appreciate.

As indicated, these modifications may be made in light of the foregoing description of illustrated embodiments and are to be included within the spirit and scope of the disclosure. Thus, while particular embodiments are described, a latitude of modification, various changes and substitutions are intended in the foregoing disclosures, and it will be appreciated that in some instances some features of embodiments of the invention will be employed without a corresponding use of other features, and features described with respect to one embodiment may be combined with features of other embodiments without departing from the scope and spirit of the disclosure as set forth.

The disclosure in the application also includes the following numbered clauses:
1. A method for distributing policy enforcement in a network, comprising:
   at a firewall in a network:
   determining that a flow matches a policy installed at the firewall, the policy having a first enforcement action;
   offloading the flow to a network element with the first enforcement action at a first time, wherein the flow is installed at the network element with the first enforcement action and the network element controls traffic associated with the flow according to the first enforcement action without forwarding traffic to the firewall;
   determining that the policy has been updated with a second enforcement action;
   selecting the flow for offloading based on the update to the policy;
   offloading the flow to the network element with the second enforcement action at a second time, wherein the flow is installed at the network element with the second enforcement action and the network element controls traffic associated with the flow according to the second enforcement action without forwarding traffic to the firewall.
2. The method of clause 1, wherein offloading the flow to the network element with the second enforcement action at a second time comprises setting a priority associated with the flow to a highest priority.
3. The method of clause 2, wherein offloading the flow to the network element with the second enforcement action at the second time comprises:
   sending an offload message to the network element, the offload message specifying the flow, the second enforcement action and the priority, wherein, in response to receiving the offload message the network element:
   determines that the flow should be installed at the network element with the second enforcement action; and
   installs the flow at the network element in association with the second enforcement action to replace an installation of the flow at the network element associated with the first enforcement action.
4. The method of any of clauses 1 to 3, further comprising:
   installing the flow at the firewall in association with the first enforcement action; and
   receiving a heartbeat message associated with the flow from the network element, wherein the determination that the policy has been updated is based on reception of the heartbeat message.
5. The method of clause 4, wherein the determination that the policy has been updated is based on the flow associated with the heartbeat message.
6. The method of clause 5, wherein determining that the policy has been updated comprises:
   identifying the flow installed at the firewall associated with the heartbeat message; and
   determining that the policy associated with the flow has been updated.
7. The method of clause 6, further comprising setting a policy update flag associated with the flow installed at the firewall, when it is determined that the policy associated with the flow has been updated, wherein the policy update flag indicates the policy associated with the flow has been updated.
8. The method of clause 7, wherein setting the policy update flag associated with the flow is done in a data plane of the firewall.
9. The method of clause 7 or clause 8, wherein selecting the policy for offloading based on the update to the policy comprises determining that the policy update flag associated with the flow installed at the firewall is set.
10. The method of any of clauses 1 to 9, wherein the network element is a network edge element.
11. The method of clause 10, wherein the network edge element is a top of rack (TOR) switch.
12. The method of any of clauses 1 to 11, wherein the firewall comprises multiple firewall instances.
13. A network element, comprising:
   a processor;
   a non-transitory computer readable medium, comprising instructions for:
      receiving a first offload message specifying a flow and a first enforcement action at a first time, wherein the first enforcement action was determined at a firewall in association with a policy;
      determining that the flow as received in the first offload message should be installed;
      storing the flow in association with the first enforcement action;
      determining first received traffic is associated with the flow received at the first time;
      applying the first enforcement action to the first received traffic at the network element without forwarding traffic to the firewall;
      receiving a second offload message specifying the flow and a second enforcement action at a second time, wherein the second enforcement action was determined at the firewall in association with an update to the policy;
      determining that the flow as received in the second offload message should be installed;
      replacing the flow in association with the first enforcement action with the flow in association with the second enforcement action at the network element;
      determining second received traffic is associated with the flow received at the second time; and
      applying the second enforcement action to the second received traffic at the network element without forwarding traffic to the firewall.
14. The network element of clause 13, wherein the second offload message includes a highest priority associated with the flow.
15. The network element of clause 13 or clause 14, wherein the instructions further comprise instructions for sending a heartbeat message to the firewall, wherein the heartbeat message identifies the flow.
16. A non-transitory computer readable medium, comprising instructions for:
   installing a flow associated with a first enforcement action at a firewall based on a policy;
   offloading the flow associated with the policy to a network element in association with the first enforcement action at a first time, wherein the flow is installed at the network element with the first enforcement action and the network element is adapted to control traffic associated with the flow according to the first enforcement action;
   selecting the flow for offloading at a second time based on an update to the policy comprising a second enforcement action, where the flow is selected for offloading based on an indication associated with the installed flow that the policy was updated, wherein the indication was set based on a heartbeat message associated with the flow received from the network element;
   offloading the flow associated with the policy to the network element with the second enforcement action at a second time, wherein the flow is installed at the network element with the second enforcement action and the network element controls traffic associated with the flow according to the second enforcement action without forwarding traffic to the firewall.
17. The non-transitory computer readable medium of clause 16, wherein the indication was set based on an identification of the flow installed at the firewall associated with the heartbeat message and the identification of the policy associated with the installed flow based on the identification of the installed flow.
18. The non-transitory computer readable medium of clause 17, wherein the indication was set based on a comparison of the first enforcement action associated with the installed flow at the firewall and the second enforcement action associated with the updated policy.
19. The non-transitory computer readable medium of clause 18, wherein the indication was set in a data plane of the firewall based on the reception of the heartbeat message.
20. The non-transitory computer readable medium of any of clauses 16 to 19, wherein the firewall comprises a firewall instance of a distributed firewall.

## Claims

1. A method for distributing policy enforcement in a network, comprising:
at a firewall in a network, determining that a flow matches a policy installed at the firewall, the policy having a first enforcement action;
at the firewall, offloading the flow to a network element with the first enforcement action at a first time:
at the network element, installing the flow with the first enforcement action, wherein the network element controls traffic associated with the flow according to the first enforcement action without forwarding traffic to the firewall;
at the firewall, determining that the policy has been updated with a second enforcement action;
at the firewall, selecting the flow for offloading based on the update to the policy;
at the firewall, offloading the flow to the network element with the second enforcement action at a second time:
at the network element, installing the flow with the second enforcement action, wherein the network element controls traffic associated with the flow according to the second enforcement action without forwarding traffic to the firewall.

2. The method of claim 1, wherein offloading the flow to the network element with the second enforcement action at a second time comprises setting a priority associated with the flow to a highest priority.

3. The method of claim 2, wherein:
offloading the flow to the network element with the second enforcement action at the second time comprises sending an offload message to the network element, the offload message specifying the flow, the second enforcement action and the priority;
and wherein, in response to receiving the offload message the network element:
determines that the flow should be installed at the network element with the second enforcement action; and
installs the flow at the network element in association with the second enforcement action to replace an installation of the flow at the network element associated with the first enforcement action.

4. The method of any preceding claim, further comprising:
installing the flow at the firewall in association with the first enforcement action; and
receiving a heartbeat message associated with the flow from the network element, wherein the determination that the policy has been updated is based on reception of the heartbeat message.

5. The method of claim 4, wherein the determination that the policy has been updated is based on the flow associated with the heartbeat message.

6. The method of claim 5, wherein determining that the policy has been updated comprises:
identifying the flow installed at the firewall associated with the heartbeat message; and
determining that the policy associated with the flow has been updated.

7. The method of claim 6, further comprising setting a policy update flag associated with the flow installed at the firewall, when it is determined that the policy associated with the flow has been updated, wherein the policy update flag indicates the policy associated with the flow has been updated.

8. The method of claim 7, wherein setting the policy update flag associated with the flow is done in a data plane of the firewall.

9. The method of claim 7 or claim 8, wherein selecting the policy for offloading based on the update to the policy comprises determining that the policy update flag associated with the flow installed at the firewall is set.

10. The method of any preceding claim, wherein the network element is a network edge element, preferably a network edge element comprising a top of rack, TOR, switch.

11. The method of any preceding claim, wherein the firewall comprises multiple firewall instances.

12. A network element, comprising:
a processor;
a non-transitory computer readable medium, comprising instructions for:
receiving a first offload message specifying a flow and a first enforcement action at a first time, wherein the first enforcement action was determined at a firewall in association with a policy;
determining that the flow as received in the first offload message should be installed;
storing the flow in association with the first enforcement action;
determining first received traffic is associated with the flow received at the first time;
applying the first enforcement action to the first received traffic at the network element without forwarding traffic to the firewall;
receiving a second offload message specifying the flow and a second enforcement action at a second time, wherein the second enforcement action was determined at the firewall in association with an update to the policy;
determining that the flow as received in the second offload message should be installed;
replacing the flow in association with the first enforcement action with the flow in association with the second enforcement action at the network element;
determining second received traffic is associated with the flow received at the second time; and
applying the second enforcement action to the second received traffic at the network element without forwarding traffic to the firewall.

13. The network element of claim 12, wherein the second offload message includes a highest priority associated with the flow.

14. The network element of claim 12 or claim 13, wherein the instructions further comprise instructions for sending a heartbeat message to the firewall, wherein the heartbeat message identifies the flow.

15. A computer readable medium having instructions which, when executed by at least one processor of a network element, cause the network element to:
receive a first offload message specifying a flow and a first enforcement action at a first time, wherein the first enforcement action was determined at a firewall in association with a policy;
determine that the flow as received in the first offload message should be installed;
store the flow in association with the first enforcement action;
determine first received traffic is associated with the flow received at the first time;
apply the first enforcement action to the first received traffic at the network element without forwarding traffic to the firewall;
receive a second offload message specifying the flow and a second enforcement action at a second time, wherein the second enforcement action was determined at the firewall in association with an update to the policy;
determine that the flow as received in the second offload message should be installed;
replace the flow in association with the first enforcement action with the flow in association with the second enforcement action at the network element;
determine second received traffic is associated with the flow received at the second time; and
apply the second enforcement action to the second received traffic at the network element without forwarding traffic to the firewall.
